# FASCICULE DE BREVET EUROPEEN

(11) **EP 2 810 093 B1**
(45) Date de publication et mention de la délivrance du brevet: **18.07.2018**
(21) Numéro de dépôt: 13701659.8
(22) Date de dépôt: 31.01.2013
(51) Int. Cl.: G01S 7/292, G01S 13/53, G01S 13/58

(54) **PROCEDE DE LEVEE D'AMBIGUÏTE SUR LES MESURES EN DISTANCE**
VERFAHREN ZUR MEHRDEUTIGKEITSAUFLÖSUNG BEI ABSTANDSMESSUNGEN
METHOD OF AMBIGUITY RESOLUTION IN DISTANCE MEASUREMENTS

(30) Priorité: 03.02.2012 FR 1200318
(43) Date de publication de la demande: 10.12.2014
(73) Titulaire: THALES, 92400 Courbevoie (FR)
(72) Inventeur: LE LEZ, Vincent, F-78851 Elancourt (FR); MONTECOT, Marc, F-Cedex Elancourt (FR); BOSSER, Luc, F-Cedex Elancourt (FR)
(74) Mandataire: Priori, Enrico
(86) Numéro de dépôt international: PCT/EP2013/051879
(87) Numéro de publication internationale: WO 2013/113804

(56) Documents cités:
- FR-A1- 2 596 873
- US-A- 4 143 373
- US-A- 5 500 647

## Description

La présente invention concerne le domaine des radars Doppler à impulsions et en particulier le traitement des signaux émis et reçus par de tels radars. La présente invention se rapporte à un procédé de levée des ambiguïtés distance.

Un radar Doppler à impulsions permet de caractériser une cible éclairée par le faisceau radar suivant deux paramètres, sa distance D par rapport au radar et sa vitesse de rapprochement Vᵣ. Pour cela, le radar Doppler à impulsions émet une onde radioélectrique composée d'une série d'impulsions périodiques ou train d'impulsions.

La distance D se déduit du retard t séparant l'instant d'émission d'une impulsion et l'instant de réception de son écho rétro-diffusé par la cible. Le retard t est donné par la formle : t=2D/c, où c désigne la vitesse de la lumière.

La vitesse de rapprochement Vᵣ est estimée en émettant un train de N impulsions périodiques et en effectuant une analyse spectrale (par transformée de Fourier) sur les N signaux reçus et démodulés par la fréquence émise. En effet, après démodulation, le signal constitué par les N échos rétro-diffusés par la cible est un signal périodique dont la fréquence, appelée fréquence Doppler f_{d}, est proportionnelle à la vitesse de rapprochement de la cible. Cette fréquence Doppler est donnée par la formule: f_{d}=2Vᵣ/λ, où λ désigne la longueur d'onde de radar.

Du fait de la discrétisation de ce signal sur n échantillons avec une fréquence d'échantillonnage Fr correspondant à la fréquence de répétition des impulsions émises, seule la valeur « ambiguë » de la fréquence Doppler, c'est à dire la valeur modulo Fr, peut être estimée.

Pour travailler avec une valeur d'ambiguïté Doppler et donc d'ambiguïté vitesse la plus haute possible, on privilégie les formes d'onde avec une fréquence de répétition des impulsions, aussi appelée fréquence de récurrence, élevée.

Cependant, cette augmentation de la fréquence de récurrence se fait au détriment de la mesure distance puisqu'elle rend à son tour cette mesure distance ambiguë : il est en effet impossible de faire la distinction entre un écho situé à une distance D et un autre situé à D+D_{amb}, avec D_{amb}=c/(2Fr).

Dès lors que les signaux rétrodiffusés peuvent s'étendre sur une plage distance supérieure à la distance ambiguë, on parle de forme d'onde ambiguë en distance, la distance de la cible est seulement connue à un rang d'ambiguïté Distance près.

En conséquence, pour un radar Doppler à impulsions, le choix de la fréquence de récurrence résulte d'un compromis. Une fréquence de récurrence relativement haute conduit à une valeur d'ambiguïté Doppler relativement haute, mais à une distance ambiguë relativement faible. A l'inverse, une fréquence de récurrence relativement basse conduit à une distance ambiguë relativement haute, mais à une valeur d'ambiguïté Doppler relativement basse.

De façon à lever les ambiguïtés distance, il est connu dans l'art antérieur une méthode consistant à émettre successivement plusieurs trains d'impulsions en faisant varier la fréquence de récurrence (et donc la valeur de la distance ambiguë) d'un train à l'autre. L'ambiguïté est ensuite levée par « dépliement » en dupliquant pour chaque train d'impulsions l'image Distance-Doppler associée, de manière à couvrir entièrement le domaine Distance-Doppler non ambigu. Après superposition de ces K images Distance-Doppler "dépliées" issues des K trains d'impulsions, la position non ambiguë de la cible correspond à la position du pixel où la cible est présente sur les K images dépliées. Cette méthode est notamment décrite dans l'ouvrage "Air and Spaceborne Radar Systems, an introduction" au paragraphe 8.6.6. Un inconvénient de cette méthode est que les différents dépliements dupliquent également tous les échos radars parasites notamment les échos de retour de sol: le fouillis (ou clutter selon le terme anglo-saxon).

Afin d'éviter cette duplication des échos parasites en distance, il convient de diminuer la fréquence de répétition des impulsions cependant du fait de l'interdépendance des paramètres radar ceci entraine une durée d'illumination du radar plus grande et donc diminue sa discrétion.

Il est également connu, dans l'art antérieur, notamment par la demande de brevet français FR 2 596 873, des perfectionnements aux radars à impulsions cohérents.

Le brevet américain US 5 500 647, enseigne une méthode rétrograde de prédiction des rangs d'ambiguïté des échos radar.

Il est également connu par brevet américain US 4 143 373 des systèmes radar adaptatifs et des méthodes associées.

Un but de l'invention est notamment de corriger les inconvénients précités en proposant une méthode de levée d'ambigüité distance des cibles limitant les repliements des échos parasites en distance et compatible avec l'utilisation de fréquences de récurrence basses.

A cet effet, l'invention a pour objet un procédé de levée d'ambiguïté sur les mesures en distance mis en oeuvre par un système radar utilisant au moins un radar Doppler à impulsions émettant un signal comportant deux trains de N impulsions périodiques, et recevant les signaux rétrodiffusés par une cible mobile, la différence ΔTr entre lesdites périodes de récurrence des deux trains d'impulsions est égale à un nombre entier k_{cd} strictement supérieur à 1 de case distance et est inférieure à 1/(2N Fdₘₐₓ) où Fdₘₐₓ représente la fréquence Doppler maximale envisagée et le procédé comportant :
- Une étape de séparation des deux trains d'impulsions du signal reçu en deux sous-signaux comportant chacun un train de N impulsions,
- Une étape de suppression de la contribution des échos parasites du fouillis sur chacun des sous-signaux,
- Une étape de test successif des différentes hypothèses de rang d'ambiguïté possible comportant pour chaque rang d'ambiguïté r testé, une étape de regroupement des deux sous-signaux après décalage temporel d'un des deux sous-signaux d'une valeur de r.k_{cd} cases distances.

Selon une particularité l'étape de suppression de la contribution des échos parasites du fouillis comporte
- une étape de filtrage simple annulation,
- une étape de transposition dans le domaine fréquentiel,
- une étape de compensation du filtrage simple annulation,
- une étape d'effacement des échos parasites du fouillis,
- une étape de transposition dans le domaine temporel.

De façon avantageuse, la transposition dans le domaine fréquentiel est réalisée par transformée de Fourier rapide et en ce que la transposition dans le domaine temporel est réalisée par transformée de Fourier rapide inverse.

Suivant un mode de mise en oeuvre, le test des différentes hypothèses de rang d'ambiguïté possible comporte en outre pour chaque rang d'ambiguïté testé :
- une étape de pondération du signal regroupé,
- une étape de transposition dans le domaine fréquentiel,
- une étape de conversion en décibel,
- une étape de filtrage des échos issus des rangs d'ambiguïté différents du rang d'ambiguïté sous test.

Selon une autre particularité, l'étape de filtrage s'effectue en calculant la valeur minimale entre un premier signal correspondant à l'interpolation sur 2N points du premier sous-signal, un deuxième signal correspondant à l'interpolation sur 2N points du deuxième sous-signal après décalage suivant l'axe case distance d'une valeur proportionnelle au rang sous test et un troisième signal correspondant au spectre du signal regroupé du rang sous test.

Avantageusement, l'interpolation des sous-signaux après suppression des échos parasites du fouillis sur 2N points comprend :
- une étape (51) de pondération,
- une étape (52) d'extension par zero-padding (extension par des zéros)
- une étape (53) de transposition dans le domaine fréquentiel,
- une étape (54) de conversion en décibel.

Selon une autre particularité, la transposition dans le domaine fréquentiel est réalisée par transformée de Fourier rapide.

Un avantage de la présente invention est que le procédé peut être mis en oeuvre sur un système radar classique sans nécessiter d'évolutions importantes du matériel.

D'autres particularités et avantages de la présente invention apparaîtront plus clairement à la lecture de la description ci-après, donnée à titre illustratif et non limitatif, et faite en référence aux dessins annexés, dans lesquels :
- La figure 1 représente des chronogrammes d'exemple d'impulsions radar ;
- La figure 2 représente un exemple d'organigramme représentant les étapes possibles du procédé selon l'invention ;
- La figure 3 représente un exemple d'algorithme complet de levée d'ambiguïté distance selon l'invention ;
- La figure 4 représente un exemple d'algorithme de l'étape de suppression de la contribution des échos parasites du fouillis ;
- La figure 5 représente un exemple d'organigramme de l'étape d'interpolation des sous-signaux ;
- La figure 6 représente, par un organigramme, un exemple de calcul de la carte sous l'hypothèse de rang d'ambiguïté 0 ;

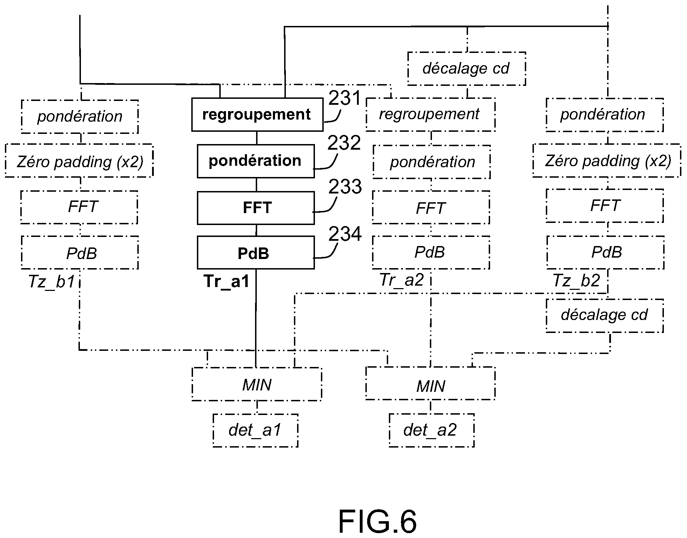

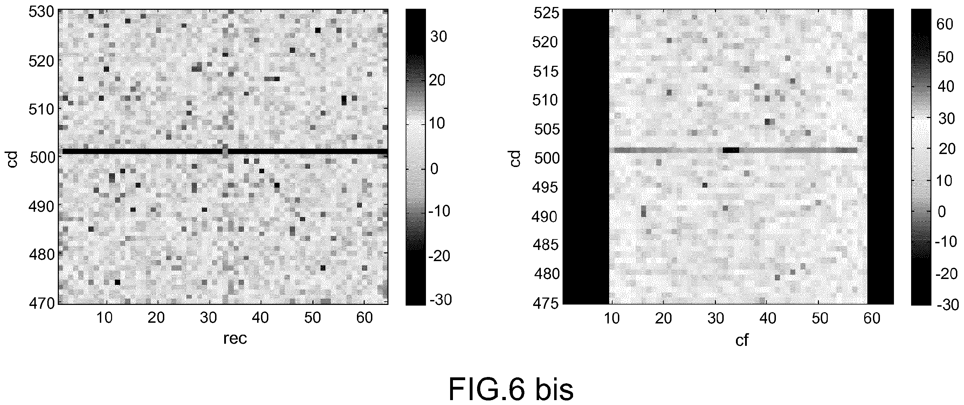

- La figure 6 bis représente un exemple de signal obtenu après regroupement des deux sous-signaux sous l'hypothèse d'un rang d'ambiguïté 0 avant et après passage dans le domaine fréquentiel pour une cible de rang d'ambiguïté 0 ;

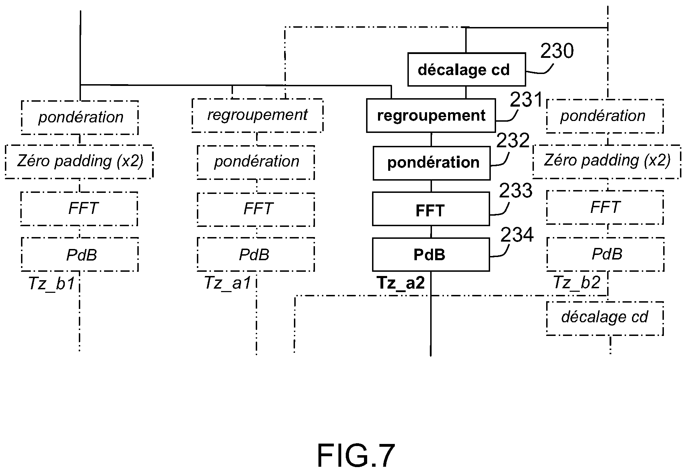

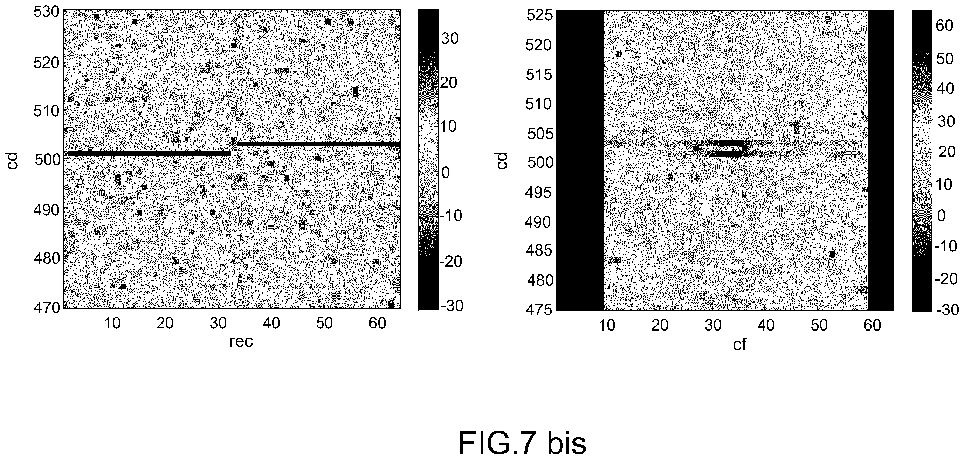

- La figure 7 représente, par un organigramme, un exemple de calcul de la carte sous l'hypothèse de rang d'ambiguïté 1 ;
- La figure 7 bis représente un exemple de signal obtenu après regroupement des deux sous-signaux sous l'hypothèse d'un rang d'ambiguïté 1 avant et après passage dans le domaine fréquentiel pour une cible de rang d'ambiguïté 0 ;

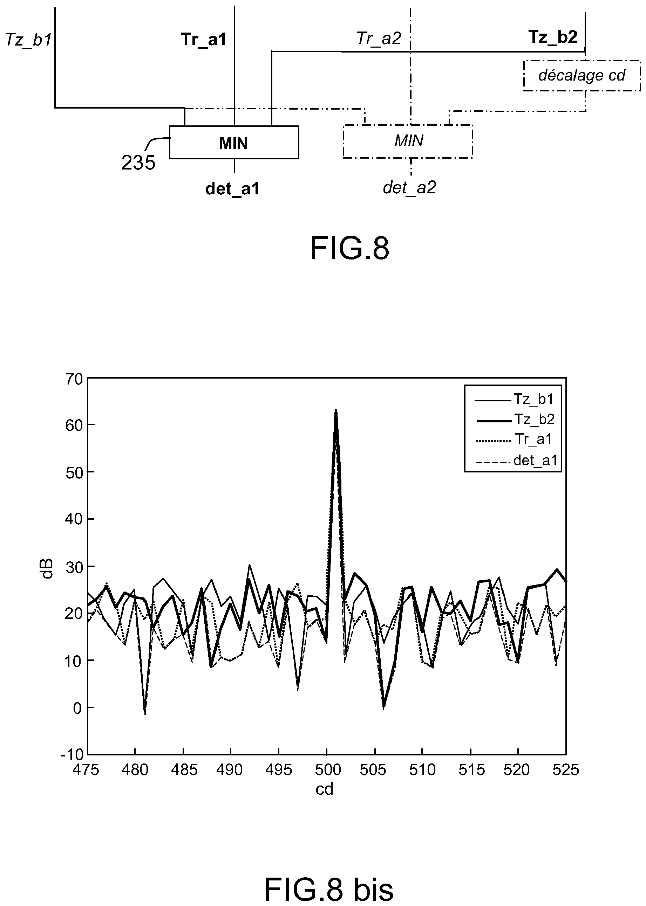

- La figure 8 représente l'étape de filtrage du rang d'ambiguïté 0;
- La figure 8 bis représente les amplitudes des signaux des cartes Tz_b1, Tz_b2, Tr_a1 et de la valeur minimale det_a1 en fonction de la case distance (cd);

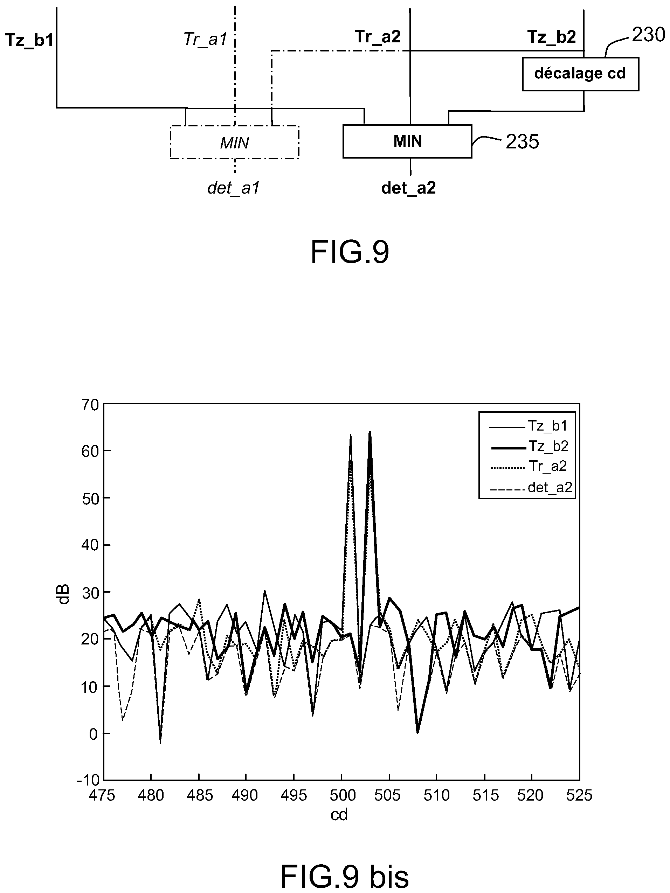

- La figure 9 représente l'étape de filtrage du rang d'ambiguïté 1 ;
- La figure 9 bis représente les amplitudes des signaux des cartes Tz_b1, Tz_b2, Tr_a2 et de la valeur minimale det_a2 en fonction de la case distance (cd).

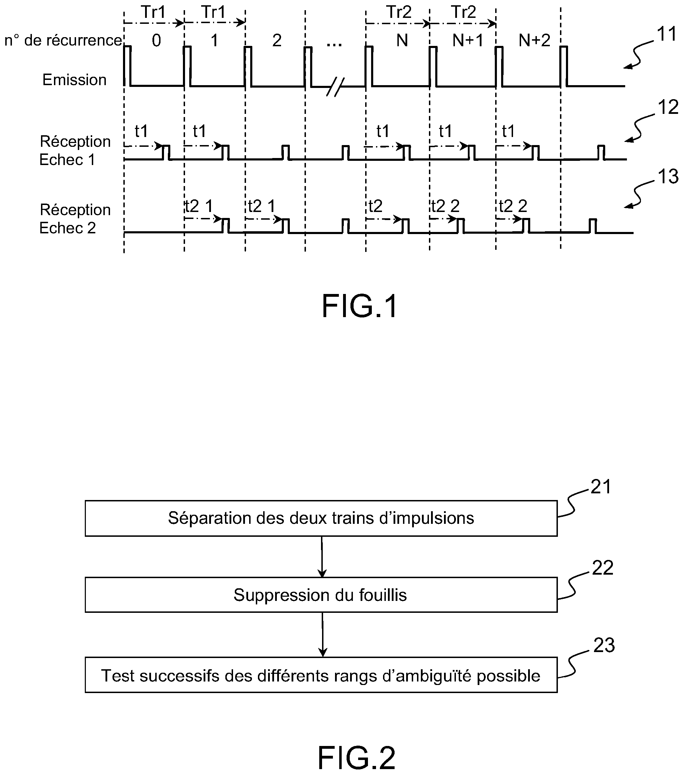

En référence à la figure 1, afin d'illustrer le principe de l'invention, on considère une forme d'onde cohérente. On rappelle qu'un radar est dit cohérent en phase lorsque ce radar maîtrise la différence de phase entre deux signaux rétro-diffusés par une même cible, c'est à dire qu'il sait en extraire le terme relatif à cette cible. Ce type de radar permet d'exploiter la phase des signaux reçus, en plus de la puissance rétrodiffusée, typiquement pour pouvoir estimer une fréquence Doppler par transformée de Fourier. On parle alors de traitement cohérent et d'intégration cohérente.

Le premier chronogramme 11 représente un exemple de signal électromagnétique pouvant être émis par un radar Doppler à impulsions mettant en oeuvre l'invention. Suivant une particularité de l'invention, la forme d'onde utilisée est formée de deux trains de N impulsions identiques périodiques. Les impulsions du premier train sont émises avec une période de répétition ou période de récurrence Tr₁. Le second train d'impulsions est émis avec une période de récurrence Tr₂ différente de Tr₁ telle que Tr₂=Tr₁+ΔTr. De façon avantageuse, la différence ΔTr entre les deux périodes de récurrence correspond à un nombre entier strictement supérieur à 1 de case distance. Chaque impulsion dans le train est identifiée par un numéro de récurrence n avec n ∈ [0, 2N-1].

On considère le cas de deux cibles situées à des distances D₁ et D₂ du radar dans deux rangs d'ambiguïté distance différents. Les chronogrammes 12 et 13 représentent des exemples d'échos reçus par le radar après réflexion de l'onde émise par le radar sur ces cibles.

Dans l'exemple représenté par le chronogramme 12, la cible est située à une distance D₁ du radar et est non ambiguë, c'est-à-dire que le retard induit par cette distance est inférieur à la période de récurrence Tr₁. Dans ce cas, on parle d'ambiguïté distance de rang zéro.

Dans ce cas de figure, chaque impulsion de l'onde émise par le radar donne lieu à un écho qui est reçu avant l'émission de l'impulsion suivante. Le décalage temporel t₁ par rapport à la dernière impulsion émise est donc indépendant de la période de récurrence.

Le troisième chronogramme 13 représente le cas d'une cible ambigüe en distance. L'écho de l'impulsion rétrodiffusée par la cible est reçu par le radar après l'émission d'une nouvelle impulsion. Dans cet exemple, le premier écho est reçu pendant la période de récurrence correspondant à la deuxième impulsion (n=1 cf Figure 2), son rang d'ambiguïté est égal à un.

Contrairement au cas précédent, dans le cas d'une cible ambigüe en distance, le décalage temporel (de valeur t2 1 ou t2 2) dépend de la période de récurrence et du rang d'ambiguïté.

L'invention utilise de façon avantageuse cette différence de comportement entre une cible non ambiguë et une cible ambiguë pour déterminer le rang d'ambiguïté. Pour la suite, on supposera que le traitement est mono-cible.

En référence à la figure 2, les différentes étapes possibles du procédé de levée d'ambiguïté sur les mesures en distance dans le traitement d'un signal d'écho reçu par un radar Doppler à impulsions sont présentées.
On suppose que le signal émis par le radar Doppler à impulsions comporte deux trains de N impulsions périodiques chacun. Suivant une particularité de l'invention, les périodes de récurrence Tr puis Tr+ΔTr de ces deux trains d'impulsions sont différentes.

La valeur de ΔTr est choisie de façon à ce que le nombre de cases distances k_{cd} correspondant soit entier et supérieur à 1, c'est à dire ΔTr=k_{cd}. Tech où Tech représente la période d'échantillonnage sur l'axe distance. Pour la suite, de façon à simplifier les explications et la représentation, le nombre de case distance k_{cd} sera pris égal à 2. Cet exemple est nullement limitatif et une extension à un nombre de case distance supérieur est possible avec le même raisonnement
La valeur de ΔTr est également choisie de façon à ce que le déphasage pour la fréquence Doppler maximale fdₘₐₓ envisagée soit suffisament faible pour permettre une intégration cohérente. Le signal doit rester dans la même case fréquence. Cela peut se traduire par : ΔTr < 1 / (2N fdₘₐₓ).
Afin d'effectuer une intégration cohérente sur les deux trains, le radar doit assurer la cohérence de phase sur l'ensemble des deux trains et en particulier entre la dernière impulsion du premier train et la première impulsion du train suivant de façon à assurer une continuité de phase à la jonction des deux trains d'impulsions.

A la réception, le signal rétrodiffusé par une cible est séparé en deux au cours d'une étape 21 de séparation des deux trains d'impulsions du signal reçu en deux sous-signaux comportant chacun un train de N impulsions. La contribution des échos parasites du fouillis est ensuite supprimée sur chacun des sous-signaux dans une étape 22. Une étape 23 de test successif des différentes hypothèses de rang d'ambiguïté possible est ensuite opérée afin de déterminer le rang d'ambiguïté du signal reçu.

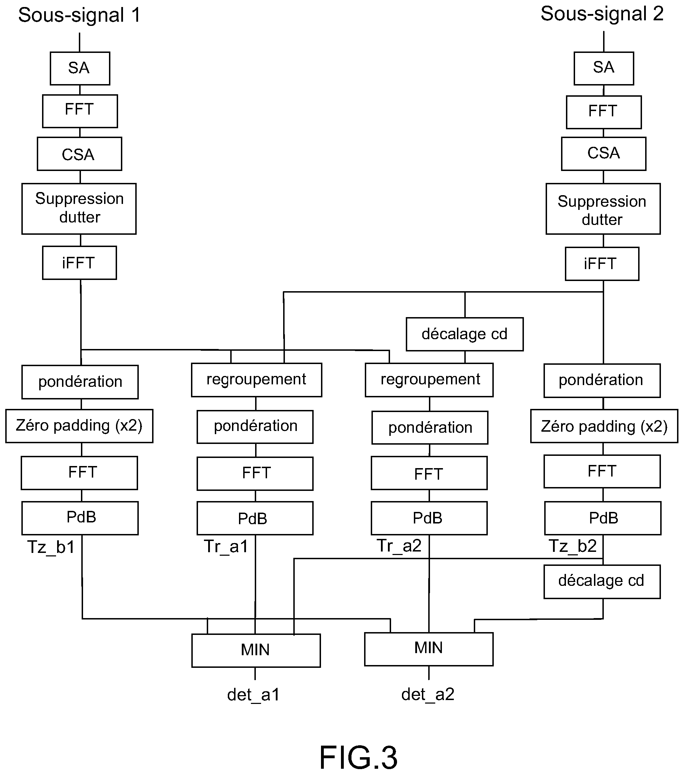

La figure 3 présente un exemple d'algorithme complet de levée d'ambiguïté distance selon l'invention. De façon à ne pas surcharger la figure, l'algorithme est présenté à travers un traitement sur deux rangs d'ambiguïtés. Cet exemple n'est nullement limitatif et peut s'étendre aux cas de rangs d'ambiguïtés distance supérieurs.
L'invention consiste à balayer un à un l'ensemble des rangs d'ambiguïté distance possible et à filtrer à chaque fois les échos issus des rangs d'ambiguïtés différents du rang d'ambiguïté sous test.

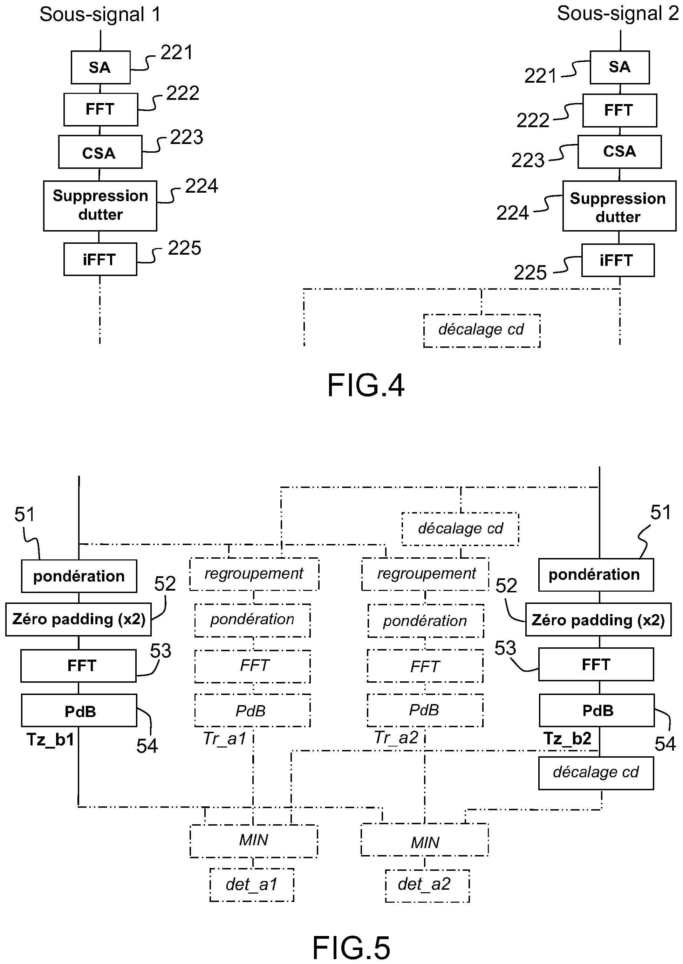

En référence à la figure 4, l'étape 22 de suppression de la contribution des échos parasites du fouillis est présentée. Cette étape 22 a pour objectif de préparer chaque sous-signal avant leur regroupement. Elle est réalisée séparément sur les deux sous-signaux issus du signal reçu.
Sur chacun de ces sous-signaux, un filtrage simple annulation 221, une transposition dans le domaine fréquentiel 222 et une compensation 223 du filtrage simple annulation sont appliqués. Suivant un mode de mise en oeuvre, la transposition dans le domaine fréquentiel est réalisée par transformée de Fourrier rapide ou FFT pour Fast Fourrier Transform selon la terminologie anglo-saxonne.
Le filtre simple annulation (SA) et sa compensation (CSA) ont pour but d'atténuer les échos parasites du fouillis (ou clutter suivant le terme anglo - saxon) et en particulier les lobes dus au passage dans le domaine fréquentiel tout en conservant le signal utile et ce même après un retour dans le domaine temporel. De façon avantageuse, cette opération permet d'obtenir une meilleure détection des cibles.
Les échos parasites du fouillis localisés autour du lobe principal sont ensuite supprimés au cours d'une étape 224 d'effacement des échos parasites du fouillis. De façon avantageuse, la suppression de ces échos parasites permet d'éviter la formation de forts lobes secondaires après regroupement des deux sous-signaux. Ces lobes sont générés par le regroupement de retour de sol de deux cases distances différentes.
Une transposition dans le domaine temporel 225 du signal obtenu est ensuite opérée. Cette transposition peut être réalisée par transformée de Fourier inverse (ou iFFT pour inverse Fast Fourier Transform).

Dans le cas où le procédé selon l'invention est mis en oeuvre par un radar aéroporté, une étape supplémentaire de compensation de phase sera ajoutée avant l'étape de filtrage simple annulation 221.

La figure 5 présente un exemple d'organigramme de l'étape d'interpolation des sous-signaux.
Cette opération à pour but de préparer les sous-signaux à N impulsions pour pouvoir les comparer au signal à 2N impulsions calculé après le regroupement des deux sous-signaux. Cette interpolation est réalisée en complétant le signal par N zéros supplémentaires (technique de zero-padding selon le terme anglo-saxon). Le traitement comporte une étape 51 de pondération, par exemple par un filtre de Hanning ou de Tchebychev, une étape 52 d'extension du signal obtenu par des zéros (technique de zero-padding), une étape 53 de transposition dans le domaine fréquentiel, par exemple par l'intermédiaire d'une transformée de Fourrier rapide et se termine par une étape 54 de conversion en décibel (PdB).

La figure 6 présente un exemple de calcul du test sous l'hypothèse de rang d'ambiguïté 0.
La première étape consiste à regrouper 231 les deux sous-signaux après suppression des échos du fouillis. L'hypothèse étant que le rang d'ambiguïté est nul, le deuxième sous-signal n'est pas décalé. Le signal regroupé est ensuite pondéré 232 et subit une transposition dans le domaine fréquentiel 233 par exemple par une transformée de Fourrier rapide. Le signal obtenu est ensuite converti en décibel 234.

La figure 7 présente un exemple de calcul du test sous l'hypothèse de rang d'ambiguïté 1.
Sous l'hypothèse que la cible possède un rang d'ambiguïté de 1 la case distance de cette cible dans le premier sous-signal est égale à sa case distance dans le second sous-signal plus k_{cd} cases. Pour regrouper les contributions de ces deux sous-signaux, il suffit de regrouper le signal de la case distance du premier sous-signal avec le signal de la case distance du second sous-signal décalé de k_{cd} cases distances.
Le traitement consiste à décaler les cases distances du second sous-signal 230 de k_{cd} cases, à regrouper les récurrences des deux sous-signaux 231, à effectuer une pondération 232, une transposition dans le domaine fréquentiel 233 puis à convertir le signal obtenu en décibel 234.

Comme précédemment, si les cibles recherchées ne sont pas ambigües en vitesse, il est possible de compenser le décalage Doppler des impulsions du deuxième sous-signal avant la transposition en fréquence de façon à annuler tout élargissement de lobe.

Dans cet exemple nullement limitatif, le nombre d'hypothèses de rang d'ambigüité est pris égal à 2. Dans un cas général où le nombre d'hypothèse serait supérieur, les branches de la Figure 7 sont dupliquées pour chaque rang d'ambiguïté supplémentaire, le décalage des récurrences du deuxième sous-signal, pour un rang r, serait de r·k_{cd} cases distance.

En référence aux figures 8 et 9 les étapes de filtrage respectivement du rang d'ambigüité 1 et du rang d'ambigüité 0 vont être présentées.

Ce filtrage repose sur le fait que si une cible de rang d'ambiguïté 0 est située dans la case distance d'indice i_{cd} dans la carte Tr_a1 de rang d'ambiguïté 0, elle sera située dans la même case dans la carte Tz_b1 issue du premier sous-signal et dans la carte Tz_b2 issue du second sous-signal. Ceci est illustré figure 6 bis où est représenté un exemple de signal obtenu après regroupement des deux sous-signaux et après suppression de l'influence du fouillis sur chaque sous-signal sous l'hypothèse d'un rang d'ambiguïté 0, avant et après passage dans le domaine fréquentiel, pour une cible de rang d'ambiguïté 0. Dans cet exemple, un seul signal est présent au niveau de la case distance 500.
Par contre, une cible de rang d'ambiguïté 1 sera partagée sur deux cases distances, i_{cd} et i_{cd} -k_{cd}, dans la carte Tr_a1 d'ambiguïté 0.
Sur la carte Tz_b1 issue du premier sous-signal elle sera concentrée dans la case i_{cd} et sur la carte Tz_b2 issue du second sous-signal elle sera concentrée dans la case i_{cd} -k_{cd}.

Pour filtrer les cibles d'ambiguïté 1 et conserver les cibles d'ambiguïté 0, le traitement consiste à calculer la valeur minimale det_a1 sur les signaux des trois cartes Tr_a1, Tz_b1 et Tz_b2. La Figure 8 bis présente le résultat (courbe delt_a1) du filtrage du rang d'ambiguïté 0 appliqué à une cible de rang d'ambiguïté 0. Le pic représentant la cible est bien conservé sans perte.

Suivant un raisonnement analogue, une cible d'ambiguïté 0 sera partagée sur deux cases distances, i_{cd} et i_{cd} -k_{cd}, dans la carte Tr_a2 d'ambiguïté 1. Ceci est illustré figure 7 bis où est représenté un exemple de signal obtenu après regroupement des deux sous-signaux, après suppression de l'influence du fouillis, sous l'hypothèse d'un rang d'ambiguïté 1, avant et après passage dans le domaine fréquentiel, pour une cible de rang d'ambiguïté 0. Sur cette représentation, le signal occupe la case distance 500 pour les 32 premiers échantillons et la case distance 502 pour les 32 échantillons suivants.
Sur la carte Tz_b1 issue du premier sous-signal, la cible d'ambiguïté 0 sera située dans la case i_{cd} seule et sur la carte Tz_b2 issue du second sous-signal, elle sera également située dans la case i_{cd}.
Si une cible de rang d'ambiguïté 1 est située dans la case distance d'indice i_{cd} dans la carte Tr_a2 de rang d'ambiguïté 1, elle sera située dans la même case dans la carte Tz_b1 issue du premier sous-signal, et dans la case distance i_{cd} -k_{cd} dans la carte Tz_b2 issue du second sous-signal.

Pour filtrer les cibles d'ambiguïté 0 et conserver les cibles d'ambiguïté 1, le traitement consiste à calculer la valeur minimale det_a2 sur les 3 cartes Tr_a2, Tz_b1 et la carte Tz_b2 décalée de k_{cd} cases distances. La Figure 9 bis présente le résultat (courbe delt_a2) du filtrage du rang d'ambiguïté 1 appliqué à une cible de rang d'ambiguïté 0. Le pic représentant la cible de rang d'ambiguïté 0 est bien supprimé.

Comme précédemment, dans un cas général où le nombre d'hypothèses serait supérieur à 2, les branches de la figure 9 sont dupliquées avec un décalage 230 des récurrences du deuxième sous-signal d'une valeur de r.k_{cd} cases distance, pour un rang d'ambiguïté r.

## Revendications

1. Procédé de levée d'ambiguïté sur les mesures en distance mis en oeuvre par un système radar utilisant au moins un radar Doppler à impulsions recevant des signaux rétrodiffusés par une cible mobile, la distance de ladite cible étant connue à un rang d'ambiguïté près, ledit procédé étant **caractérisé en ce que** ledit radar Doppler émet un signal comportant deux trains de N impulsions périodiques, la différence ΔTr entre les périodes de récurrence des deux trains d'impulsions étant égale à un nombre entier k_{cd} strictement supérieur à 1 de cases distance et inférieure à 1/(2N Fdₘₐₓ), où Fdₘₐₓ représente la fréquence Doppler maximale envisagée, et **en ce que** le procédé comporte :
- une étape (21) de séparation des deux trains d'impulsions du signal reçu en deux sous-signaux comportant chacun un train de N impulsions,
- une étape (22) de suppression de la contribution des échos parasites du fouillis sur chacun des sous-signaux,
- une étape (23) de test successif des différentes hypothèses de rangs d'ambiguïtés possibles comportant pour chacun desdits rangs d'ambiguïtés testé, une étape (231) de regroupement des deux sous-signaux après décalage temporel (230) d'un des deux sous-signaux d'une valeur de r·k_{cd} cases distances, r étant le rang d'ambiguïté testé.

2. Procédé selon la revendication précédente **caractérisé en ce que** l'étape (22) de suppression de la contribution des échos parasites du fouillis comporte
- une étape (221) de filtrage simple annulation,
- une étape (222) de transposition dans le domaine fréquentiel,
- une étape (223) de compensation du filtrage simple annulation,
- une étape (224) d'effacement des échos parasites du fouillis,
- une étape (225) de transposition dans le domaine temporel.

3. Procédé selon la revendication précédente **caractérisé en ce que** la transposition dans le domaine fréquentiel est réalisée par transformée de Fourier rapide et **en ce que** la transposition dans le domaine temporel est réalisée par transformée de Fourier rapide inverse.

4. Procédé selon une des revendications précédentes **caractérisé en ce que** le test des différentes hypothèses de rang d'ambiguïté possible comporte en outre pour chaque rang d'ambiguïté testé :
- une étape (232) de pondération du signal regroupé,
- une étape (233) de transposition dans le domaine fréquentiel,
- une étape (234) de conversion en décibel,
- une étape (235) de filtrage des échos issus des rangs d'ambiguïté différents du rang d'ambiguïté sous test.

5. Procédé selon la revendication précédente **caractérisé en ce que** l'étape de filtrage s'effectue en calculant la valeur minimale entre un premier signal correspondant à l'interpolation sur 2N points du premier sous-signal, un deuxième signal correspondant à l'interpolation sur 2N points du deuxième sous-signal après décalage suivant l'axe case distance d'une valeur proportionnelle au rang sous test et un troisième signal correspondant au spectre du signal regroupé du rang sous test.

6. Procédé selon la revendication précédente **caractérisé en ce que** l'interpolation des sous-signaux après suppression des échos parasite du fouillis sur 2N points comprend :
- une étape (51) de pondération,
- une étape (52) d'extension par zero-padding (extension par des zéros)
- une étape (53) de transposition dans le domaine fréquentiel,
- une étape (54) de conversion en décibel.

7. Procédé selon une des revendications 4 à 6 **caractérisé en ce que** la transposition dans le domaine fréquentiel est réalisée par transformée de Fourier rapide.

## Patentansprüche

1. Verfahren zur Mehrdeutigkeitsauflösung bei Abstandsmessungen, umgesetzt durch ein Radarsystem, welches mindestens einen Doppler-Impuls-Radar verwendet, welcher Signale empfängt, die durch ein bewegliches Target zurückgesendet werden, wobei der Abstand des Targets auf einen Mehrdeutigkeitsrang genau bekannt ist, wobei das Verfahren **dadurch gekennzeichnet ist, dass** der Doppler-Radar ein Signal sendet, welches zwei Impulsfolgen von N periodischen Impulsen beinhaltet, wobei die Differenz ΔTr zwischen den Wiederholungsperioden der beiden Impulsfolgen gleich einer Ganzzahl k_{cd} ist, welche absolut größer ist als 1 Box Abstand, und kleiner als 1/(2N Fdₘₐₓ), wobei Fdₘₐₓ die maximale geplante Doppler-Frequenz darstellt
und dadurch, dass das Verfahren Folgendes beinhaltet:
- einen Schritt (21) des Trennens der zwei Impulsfolgen des empfangenen Signals in zwei Untersignale, wobei jedes eine Impulsfolge von N Impulsen beinhaltet,
- einen Schritt (22) des Löschens des Beitrags der Clutter-Störechos aus jedem der Untersignale,
- einen Schritt (23) des Testens, nacheinander, der unterschiedlichen möglichen Hypothesen des Mehrdeutigkeitsranges, beinhaltend, für jeden der getesteten Mehrdeutigkeitsränge, einen Schritt (231) des Gruppierens der beiden Untersignale nach zeitlicher Verschiebung (230) eines der beiden Untersignale um einen Wert von r•k_{cd} Entfernungszellen, wobei r der getestete Mehrdeutigkeitsrang ist.

2. Verfahren nach dem vorhergehenden Anspruch, **dadurch gekennzeichnet, dass** der Schritt (22) des Löschens des Beitrags der Clutter-Störechos Folgendes beinhaltet:
- einen Schritt (221) des Filterns mit einfacher Annullierung,
- einen Schritt (222) des Transponierens im Frequenzbereich,
- einen Schritt (223) des Kompensierens des Filterns mit einfacher Annullierung,
- einen Schritt (224) des Löschens der Störechos des Clutters,
- einen Schritt (225) des Transponierens im Zeitbereich.

3. Verfahren nach dem vorhergehenden Anspruch, **dadurch gekennzeichnet, dass** die Transposition im Frequenzbereich durch eine schnelle Fourier-Transformation durchgeführt wird, und dadurch, dass die Transposition im Zeitbereich durch eine inverse schnelle Fourier-Transformation durchgeführt wird.

4. Verfahren nach einem der vorhergehenden Ansprüche, **dadurch gekennzeichnet, dass** der Test der unterschiedlichen möglichen Mehrdeutigkeitsrang-Hypothesen zudem für jeden getesteten Mehrdeutigkeitsrang Folgendes beinhaltet:
- einen Schritt (232) des Gewichtens des gruppierten Signals,
- einen Schritt (233) des Transponierens im Frequenzbereich,
- einen Schritt (234) des Konvertierens in Dezibel,
- einen Schritt (235) des Filterns der Echos aus den Mehrdeutigkeitsrängen, welche sich von dem getesteten Mehrdeutigkeitsrang unterscheiden.

5. Verfahren nach dem vorhergehenden Anspruch, **dadurch gekennzeichnet, dass** der Schritt des Filterns erfolgt, indem der minimale Wert zwischen einem ersten Signal, welches der Interpolation an 2N Punkten des ersten Untersignals entspricht, einem zweiten Signal, welches einer Interpolation an 2N Punkten des zweiten Untersignals nach Verschiebung entlang der Entfernungszellen-Achse um einen Wert, welcher proportional zum getesteten Rang ist, und einem dritten Signal, welches dem Spektrum des gruppierten Signals des getesteten Ranges entspricht, berechnet wird.

6. Verfahren nach dem vorhergehenden Anspruch, **dadurch gekennzeichnet, dass** die Interpolation der Untersignale nach Löschung der Störechos des Clutters an 2N Punkten Folgendes beinhaltet:
- einen Schritt (51) des Gewichtens,
- einen Schritt (52) der Erweiterung durch Zero-Padding (Erweiterung um Nullen),
- einen Schritt (53) des Transponierens im Frequenzbereich,
- einen Schritt (54) des Konvertierens in Dezibel.

7. Verfahren nach einem der Ansprüche 4 bis 6, **dadurch gekennzeichnet, dass** die Transposition im Frequenzbereich durch eine schnelle Fourier-Transformation durchgeführt wird.

## Claims

1. Method for removal of ambiguity resolution in distance on the measures implemented by a radar system using at least one pulse-Doppler radar which receives backscattered signals from a moving target,
the distance from the target being known to a rank of ambiguity distance close, the method being **characterised in that** the Doppler radar transmits a signal comprising two trains of N periodic pulses, the difference ΔTr between the periods of recurrence of the two pulse trains being equal to an integer k_{cd} strictly greater than 1 distance cell and less than 1/(2N Fdₘₐₓ), where Fdₘₐₓ represents the maximum Doppler frequency considered,
- and **in that** the method comprises:
- a step (21) of separating the two pulse trains of the signal received into two sub-signals each comprising a train of N pulses,
- a step (22) of removing the contribution of the parasitic echoes from the clutter on each of the sub-signals,
- a step (23) of successive testing of the different hypotheses of possible ranks of ambiguity comprising for each of the ambiguity ranks tested a step (231) of clustering the two sub-signals after temporally offsetting (230) one of the two sub-signals by a value of r-k_{cd} distance cells, r being the ambiguity rank tested.

2. Method according to the preceding claim, **characterised in that** the step (22) of suppressing the contribution of interference clutter comprises:
- a step (221) of simple cancellation filtering,
- a step (222) of transposition to the frequency domain,
- a step (223) of compensation of the simple cancellation filtering,
- a step (224) of erasing the interference clutter,
- a step (225) of transposition to the time domain.

3. Method according to the preceding claim, **characterised in that** the transposition to the frequency domain is carried out by means of fast Fourier transform and **in that** the transposition to the time domain is carried out by means of inverse fast Fourier transform.

4. Method according to any one of the preceding claims, **characterised in that** the test of the different possible ambiguity rank hypotheses further comprises for each ambiguity rank tested:
- a step (232) of weighting the clustered signal,
- a step (233) of transposition to the frequency domain,
- a step (234) of conversion into decibels,
- a step (235) of filtering the echoes originating from the different ambiguity ranks of the ambiguity rank being tested.

5. Method according to the preceding claim, **characterised in that** the filtering step is carried out by calculating the minimum value between a first signal corresponding to the interpolation over 2N points of the first sub-signal, a second signal corresponding to the interpolation over 2N points of the second sub-signal after offsetting along the distance cell axis by a value proportional to the rank being tested and a third signal corresponding to the spectrum of the clustered signal of the rank being tested.

6. Method according to the preceding claim, **characterised in that** the interpolation of the sub-signals after suppression of the interference clutter over 2N points comprises:
- a step (51) of weighting,
- a step (52) of extension by zero padding (extension by zeros),
- a step (53) of transposition to the frequency range,
- a step (54) of conversion into decibels.

7. Method according to any one of claims 4 to 6, **characterised in that** the transposition to the frequency range is carried out by means of fast Fourier transform.
